# EUROPÄISCHE PATENTSCHRIFT

(11) **EP 3 601 404 B1**
(45) Veröffentlichungstag und Bekanntmachung des Hinweises auf die Patenterteilung: **03.04.2024**
(21) Anmeldenummer: 18713253.5
(22) Anmeldetag: 28.03.2018
(51) Int. Cl.: C08G 18/79, C08G 18/22, C08G 18/32, C08G 18/24, C08G 18/42, C08G 18/44

(54) **TRANSLUZENTE POLYURETHANSCHAUMSTOFFE**
TRANSLUCENT POLYURETHANE FOAMS
MOUSSE POLYURÉTHANE TRANSLUCIDE

(30) Priorität: 28.03.2017 EP 17163224
(43) Veröffentlichungstag der Anmeldung: 05.02.2020
(73) Patentinhaber: Covestro Deutschland AG, 51373 Leverkusen (DE)
(72) Erfinder: BÖHNKE, Lutz, 51491 Overath (DE); ACHTEN, Dirk, 51375 Leverkusen (DE); MALEIKA, Robert, 40589 Düsseldorf (DE)
(86) Internationale Anmeldenummer: PCT/EP2018/057890
(87) Internationale Veröffentlichungsnummer: WO 2018/178139

(56) Entgegenhaltungen:
- US-A1- 2009 075 030

## Beschreibung

Die vorliegende Erfindung betrifft spezifische transluzente, bevorzugt lichtechte, PolyurethanSchaumstoffe, die eine hohe Lichttransmission besitzen und daher z.B. für die Herstellung von transluzenten Polyurethanschaumstoffen oder Mehrschichtverbundelementen beispielsweise zur Herstellung von Bauelementen, insbesondere als Dachelemente wie Lichtbändern und Lichtkuppeln, als Wandelement wie ein Paneel, in Fahrzeugen, in Lampen, als Möbel, als Trennwände und in Sanitäreinrichtungen, geeignet sind.

### Stand der Technik

Polyisocyanat-basierte Hartschaumstoffe als Zwischenschicht für Sandwichstrukturen (geformte Sandwichplatten) sowie deren Verwendung zur Herstellung von Bauelementen sind an sich bekannt. Auch transluzente Schaumstoffplatten als Wand- und Deckenplatten wurden schon beschrieben (DE 10 2005 042 235 A1). Allerdings wurde die Transluzenz nicht dadurch erreicht, dass die Schaumstoffe selbst transluzent sind, sondern dadurch, dass Lichtleitfasern eingearbeitet wurden. Solche Sandwichelemente können auch mit Weichschäumen hergestellt werden, wobei die transluzenten und/oder transparenten Deckschichten je nach Anwendungsfall steif oder biegsam sein müssen. Die aus dem Stand der Technik bekannten Polyurethan- und Polyisocyanuratschaumstoffe sind jedoch nicht transluzent.

Polyurethan- und Polyisocyanurathartschaumstoffe werden üblicherweise zur Wärmedämmung eingesetzt. Bevorzugt sind solche Schäume feinzellig und geschlossenzellig und zeigen einen möglichst geringen Schrumpf und geringe Wasseraufnahme.

Transluzente Polyurethanschäume mit guter Lichtdurchlässigkeit und gutem thermischen Isolationsverhalten sind als Materialien sowohl für die Bauindustrie als auch im Bereich Innenraum und Wohndesign interessant. Thermoplastische Multistegplatten auf Basis von Polymethylmethacrylat und Polycarbonat, die auch transparent gestaltet sein können, werden zu diesem Zweck manchmal eingesetzt. Der Prozess der Herstellung von Multistegplatten erlaubt allerdings nicht die direkte Herstellung geschlossener zellulärer Strukturen, weshalb Vergilbung, Veralgung und andere durch Feuchtigkeitsmigration verursachte Effekte nie ganz ausgeschlossen werden können. Außerdem sind hochwertige Dämmung und Sichtschutz nur bedingt vorhanden und sehr aufwendig, zum Beispiel durch Füllen der Multistegplatten mit Silica basierten Aerogelen, möglich. Auch hier ist die Wasseraufnahme und Volumenstabilität der gefüllten Komponente kritisch. Transluzente Bauelemente auf Basis von Silica-Aerogelen bzw. Silica Xerogelen sind zudem in ihre Herstellung aufwändig und teuer.

Polyurethanbasierte Schäume (auch PUR-Schäume genannt) mit transluzenten aber nicht transparenten Eigenschaften, welche gleichzeitig wärmedämmende Eigenschaften aufweisen, sind auf Basis von organischen witterungsstabilen Polyurethanen noch nicht beschrieben, würden aber in einer neuen Kombination verschiedene Bedürfnisse befriedigen wie Witterungsstabilität, Dämmung, Lichtdurchlässigkeit, Sichtschutz, und Farbstabilität.

Die Aufgabe der vorliegenden Erfindung bestand somit darin einen Polyurethanschaumstoff mit hoher Transluzenz zur Verfügung zu stellen, welcher zur Herstellung von, bevorzugt farbloser, Schaumkörpern verwendet werden kann. Vorzugsweise sollen diese Schäume weitestgehend farblos, somit bei Bedarf einfärbbar und zudem temperaturstabil sein. Eine weitere Aufgabe der vorliegenden Erfindung bestand darin, ein effizientes Verfahren zur Herstellung von transluzenten, dämmenden Baustoffen, die die oben genannte Bedürfnisse befriedigen und oben genannte Nachteile überkommen, zur Verfügung zu stellen.

Überraschenderweise wurde nun gefunden, dass die erfindungsgemäßen Polyurethanschäume eine deutlich höhere Lichttransmission besitzen, wenn die einzelnen Komponenten im Wesentlichen blasenfrei vermischt werden und mit einem chemischen Treibmittel geschäumt werden. Hierbei ist die Inkorporation von Gasen, insbesondere von Luft vor der Treibreaktion im Wesentlichen zu vermeiden. Da die Trübung der Reaktionsmischung vor der Treibreaktion maßgeblich durch Streuung des Lichtes an Mikrobläschen verursacht wird, kann diese als Maß für die durch eingemischte Luft / Gas gebildeten Mikrobläschen herangezogen werden. Die Reaktionsmischung vor dem Einsatz der Treibreaktion sollte deshalb eine Trübung nach DIN EN ISO 7027:2016-11 von weniger als 3500 NTU, bevorzugt weniger als 3000 NTU, stärker bevorzugt weniger als 2000 NTU und ganz besonders bevorzugt von weniger als 1000 NTU aufweisen.

Werden die Komponenten auf diese Art vermischt, dann haben die erfindungsgemäßen Schäume auf Basis von Polyurethanschäumen eine hohe Lichttransmission von mindestens 10% gemessen bei 20 mm Dicke, und gute Dämmeigenschaften, nämlich eine gute Wärmeleitfähigkeit, bevorzugt von kleiner als 100 mW/(m*K).

Die Aufgaben wurden gelöst durch ein Verfahren zur Herstellung eines transluzenten Polyurethanschaumstoffs durch Umsetzung einer Komponente A umfassend,

| | |
|---|---|
| A1 | mindestens eine, mit der Komponente B reaktive, Komponente mit Zeriwitinoff aktivem Wasserstoff; |
| | |
| A2 | Wasser und / oder andere chemische Treibmittel; |
| | |
| A3 | mindestens einen Schaumstabilisator; |
| | |
| A4 | gegebenenfalls Hilfs- und/oder Zusatzstoffe; |
| | |
| A5 | gegebenenfalls mindestens ein Flammschutzmittel; |
| | |
| A6 | mindestens einen Katalysator; |
| | und eine Komponente B, umfassend, |
| | |
| B1 | mindestens eine aliphatische oder cycloaliphatische Polyisocyanatkomponente oder eine Kombination davon, und |
| | |
| B2 | weniger als 20 Gew.-Teile einer aromatischen Polyisocyanatkomponente, wobei die Gewichtsteile von B2 bezogen sind auf die Summe der Gewichtsteile von B1 + B2, welche auf 100 Gew.-Teile normiert werden, dadurch gekennzeichnet, dass |
| | die Umsetzung der Komponente A mit der Komponente B bei einer Isocyanat-Kennzahl von 70 bis 130 durchgeführt wird und wobei alle Gewichtsteilangaben der Komponenten A1 bis A6 so normiert sind, dass die Summe der Gewichtsteile von A1 bis A6 in der Zusammensetzung 100 Gew.-Teile sind, wobei |
| | die Reaktionsmischung vor dem Einsatz der Treibreaktion eine Trübung von weniger als 3500 NTU, bevorzugt 3000 NTU, stärker bevorzugt 2000 NTU und ganz besonders bevorzugt von weniger als 1000 NTU nach DIN EN ISO 7027:2016-11 aufweist; und |
| | wobei der erhaltene transluzente Polyurethanschaumstoff eine Lichttransmission nach EN ISO 13468-2:2006 (400 nm bis 800 nm) im Bereich von 10% bis 60%, gemessen bei einer Schichtdicke des Schaumstoffs von 20 mm aufweist, und wobei der erhaltene transluzente Polyurethanschaumstoff eine Trübung (Haze = 100* Transmission diffus / Transmission gesamt) nach ASTM D1003-13 von mindestens 80%, gemessen bei einer Schichtdicke des Schaumstoffs von 20 mm, aufweist. |

Unter einem Polyurethanschaumstoff wird ein Schaumstoff verstanden, bei dem die Aushärtung der flüssigen Ausgangsformulierung, enthaltend Isocyanate und Polyole mit einer Kennzahl von 70 bis 130, bevorzugt 85 bis 110, besonders bevorzugt 95 bis 105 zu einem vernetzten Polymer in Schaumform führt.

In der vorliegenden Erfindung sind die Begriffe "im Wesentlichen keine" und "im Wesentlichen frei von" so zu verstehen, dass das jeweilige Merkmal, in Bezug auf das jeweilige System, Gemisch oder die jeweilige Komponente in weniger als 2% oder Gew.-%, bevorzugt in weniger als 1% oder Gew.-%, stärker bevorzugt in weniger als 0,5% oder Gew.-%, am stärksten bevorzugt in weniger als 0,1% oder Gew.-% vorliegt oder nicht vorhanden ist.

Handelsübliche Polyurethanschäume haben typischerweise eine Transluzenz von kleiner 10 % bei einer Schaumstoffdicke von 20 mm. Ohne an eine Theorie gebunden zu sein wird davon ausgegangen, dass aufgrund der, im Verhältnis zu den transluzenten Schäumen, kleinen Zellgrößen und aufgrund der vielen Zellstege Licht stark gestreut wird, wodurch die Lichttransmission aufgrund von starker Reflektion des einfallenden Lichtes an der Oberfläche stark abnimmt. Die Zellstegdicken von im Stand der Technik bekannten Schäume betragen dabei üblicherweise 0,01 bis 0,04 mm.

### Komponente mit Zeriwitinoff aktivem Wasserstoff A 1

Für Schäume kommen dabei besonders solche Polyole in Betracht, die durch Reaktion mit aliphatischen Isocyanaten und / oder Polyisocyanaten zum Einsatz, die zu lichtechten Polyurethanschäumen führen. Solche Polyole sind beispielsweise Polyacrylatpolyole, Polyesterpolyole oder Polycarbonatpolyole oder Polyethercarbonatpolyole. Polyetherpolyole sind nicht bevorzugt, da sie typischerweise nur bedingt Lichtecht und Witterungsbeständig sind, können aber anteilig enthalten sein wenn sie ausreichend mit Lichtschutzmittel stabilisiert werden. Die erfindungsgemäßen Polyole können alleine oder in Kombination mit typischen niedermolekularen Polyolen bevorzugt mit einem Molekulargewicht von höchstens 200 g/mol, und / oder Aminen wie z.B. Ethylenglykol, Butylenglykol, Diethylenglykol, Triethylenglykol, Polyalkylenglykole wie Polyethylenglykol, weiterhin 1,2-Propandiol, 1,3-Propandiol, 1,2-Butandiol, 1,3-Butandiol, 1,4-Butandiol, Hexandiol, Pentandiol, 3-Methyl-1,5- pentandiol, 1,12-Dodecandiol, 1,6-Hexandiol und Isomere, Neopentylglykol oder Hydroxypivalinsäureneopentylglykolester zum Einsatz kommen. Die genannten Polyole sind beispielhaft aber nicht ausschließlich zu sehen. Daneben können hochfunktionelle Polyole wie Trimethylolpropan, Glycerin, Erythrit, Pentaerythrit, Trimethylolbenzol oder Trishydroxyethylisocyanurat eingesetzt werden. Besonders bevorzugt können Glycerin, Ethylenglykol, Diethylenglykol, Propylenglykol, zum Einsatz kommen.

### Komponente A2

Physikalische und chemische Treibmittel sind dem Fachmann auf dem Gebiet der Schaumstoffe bekannt.

Die Menge des eingesetzten bevorzugt chemischen Treibmittels A2 hängt von der gewünschten Dichte des Schaums ab. Als Treibmittel können beispielhaft Wasser, Ameisensäure, halogenierte Kohlenwasserstoffe, Ester (insbesondere Methylformiat, Ethylformiat, Methylacetat, Ethylacetat) und / oder Gemische davon verwendet werden. Bevorzugtes chemisches Treibmittel ist Wasser.

In einer bevorzugten Ausführungsform wird das Vermischen der zuvor entgasten Komponenten beispielsweise in einem Rührverfahren unter Vermeidung des Einmischens von Luft (und anderen in der Reaktionsmasse/ dem Reaktionsgemisch nicht löslichen Gasen) durchgeführt. Im Gegensatz zu Luft und anderen Gasen liegen die bevorzugten chemischen Treibmittel vor der Reaktion homogen weitgehend gelöst in der Reaktionsmasse vor und nukleieren erst während der Polymerisationsreaktion. Eine vorzeitige Nukleierung kann vermieden werden, indem im Wesentlichen keine in der Reaktionsmasse/dem Reaktionsgemisch nichtlöslichen Gase vorhanden sind beziehungsweise diese durch Entgasen im Wesentlichen entfernt werden und deren Einbringung vermieden wird. So können verhältnismäßig grobe aber einheitliche erfindungsgemäße Schäume erhalten werden.

### Komponenten A3

Schaumstabilisatoren, insbesondere Silikontensiden und stärker bevorzugt Siloxan-Polyoxyalkylen-Copolymeren und / oder Polydimethylsiloxan-Polyoxyalkylen-Copolymeren.

### Komponente A4

Hilfs- und Zusatzstoffe sind dem Fachmann auf dem Gebiet der Schaumstoffe bekannt. In bevorzugten Ausführungsformen können zum Schutz der Schäume Antioxidantien und Hitzestabilisatoren eingesetzt werden. Antioxidantien sind chemische Verbindungen, die einen Radiaklabbau und -zerfall verhindern oder verzögern. Dies sind zum einen Radiaklfänger, die reaktive H-Atome besitzen, wie sterisch gehinderte Phenole (z.B. kommerziell erhältlich als Irganox 1135) oder sie zersetzen Hydroperoxide (thermo-oxidativer Abbau), wie z.B. Thioester (kommerziell erhältlich als PS800). Andere gebräuchliche Hilfs- und Zusatzstoffe sind Initiatoren, Pigmente, Additive und Füllstoffe.

### Komponente A5

Nicht verfärbende Flammschutzmittel wie z.B. Triethylphosphat können ebenfalls in bevorzugten Ausführungsformen eingesetzt werden.

### Katalysatoren A6

Bei der Bildung von Schaumstoffen aus Polyol/Wasser-Gemischen, Polyol/Wasser/Ameisensäure-Gemischen und Isocyanat bzw. Polyisocyanat ist der Einsatz geeigneter Katalysatoren erforderlich. Diese sind dem Fachmann bekannt.

Beispielhaft geeignete Katalysatoren sind z.B. Ammoniumformiat, Ammoniumacetat, Ammoniumoktanoat, Zinn-(II)-acetat, Zinn-(II)-octoat, Zinn-(II)-ethylhexoat, Zinn-(II)-laurat, Dibutylzinndiacetat, Dibutylzinndilaurat, Dibutylzinnmaleat, Dimethylzinndineodecanoat, Dimethylzinndioleat, Dimethylzinnlaurylmercaptid, Dioctylzinndineodecanoat, Dioctylzinndiacetat, Bismuth-2-ethylhexanoat, Cobalt-2-ethylhexanoat, Eisen-2-ethylhexanoat, Natriumacetat, Natriumoctoat, Natriumethylhexoat, Kaliumformiat, Kaliumacetat, Kaliumethylhexoat, Kaliumoctoat sowie Mischungen davon. Um die Treibreaktion (Reaktion zwischen Wasser und / oder Ameisensäure und Isocyanat) zu beschleunigen, können auch zusätzlich aminische Katalysatoren zum Einsatz kommen, wie beispielsweise 1,8-Diazabicyclo[5.4.0]undec-7-en (DBU), 1,5-Diazabicyclo[4.3.0]non-5-en (DBN) etc. In EP 0629607 A2 wird zum Beispiel die Herstellung von tertiären Aminogruppen aufweisende Verbindung und deren Verwendung als Katalysator beschrieben.

### Polyisocyanatkomponente B (auch bezeichnet als Komponente B)

Ausgangsverbindungen für die Polyisocyanatkomponente B für das erfindungsgemäße Verfahren sind B1 mindestens eine aliphatische oder cycloaliphatische Polyisocyanatkomponente oder eine Kombination davon, und B2 weniger als 20 Gew.-Teile, einer aromatischen Polyisocyanatkomponente. Solche Isocyanate werden typischerweise durch Phosgenierung hergestellt, können aber auch auf Phosgen freiem Weg, beispielsweise durch Urethanspaltung, hergestellt werden. In einem bevorzugten Fall werden die Produkte einer gezielten Trimerisierung von Diisocyanaten, als bei Raumtemperatur (23°C) flüssige Ausgangsverbindungen, eingesetzt. Diese und deren Herstellungsverfahren werden beispielsweise in der EP 0010589 A1 und EP 0047452 A1 beschrieben. Alternative Synthesewege sind beispielsweise die katalytische Carbonylierung von Nitro-Verbindungen bzw. Aminen oder die Umsetzung primärer Amine mit Di-tert-butyldicarbonat (Diboc) in Anwesenheit von 4-(Dimethylamino)-pyridin (DMAP).

Gewöhnliche Polyurethanschaumstoffe für den Einsatz als Dämm- und Dichtstoffe werden üblicherweise auf Basis von Mischungen aus 4,4'-, 2,4'- und 2,2'-Diphenylmethandiisocyanaten (MDI) und Polyphenyl-polymethylen-polyisocyanaten (p-MDI) hergestellt. Solche Schaumstoffe sind allerdings weder transluzent noch farb- noch lichtecht und neigen zu starker Verfärbung. Diese anfängliche Vergilbung geht später oft in eine bräunliche Verfärbung über. Daher sind handelsübliche Polyurethanschaumstoffe auf Basis aromatischer Isocyanate (mit einem Anteil von über 20 Gew.-% an dem gesamten Isocyanat) per se nicht geeignet für die Herstellung transluzenter Schäume. Gemäß der vorliegenden Erfindung können diese daher nur zu einem maximalen Anteil von 20 Gew.-Teilen, basierend auf der gesamten Polyisocyanatkomponente B vorhanden sein.

Die Polyisocyanatkomponente B weist vorzugsweise eine Viskosität gemäß DIN EN ISO 3219:1994-10 bei 23°C von 5 bis 30000 mPas auf, stärker bevorzugt von 200 bis 25000 mPas, am stärksten bevorzugt von 800 bis 22500 mPas.

Es ist vorteilhaft, wenn mindestens 70 Gew.-%, insbesondere 90 Gew.-%, basierend auf dem Gesamtgewicht von B, aliphatische Polyisocyanate verwendet werden. Vorteilhaft sind Isocyanuratgruppen-haltige und/oder Iminooxadiazinediongruppen-haltige Polyisocyanate auf Basis von 1,6-Diisocyanatohexan (HDI) mit einem NCO-Gehalt < 25 % und einer mittleren NCO-Funktionalität von > 2.

Zur Kompatibilisierung können, insbesondere in Gegenwart polarer, chemischer Treibmittel wie Wasser, zumindest anteilmäßig hydrophilierte Isocyanuratgruppen-haltiges Polyisocyanate eingesetzt werden Covestro Deutschland AG bietet solche Verbindungen kommerziell unter dem Namen Bayhydur für den Einsatz als Vernetzer in der Lackindustrie an. Insbesondere ist das kommerziell erhältliche hydrophilierte Isocyanat Bayhydur 3100 (NCO-Gehalt: 17,4 %, mittlere NCO-Funktionalität: 3,2 (nach GPC), monomeres HDI: 0,1 %, Viskosität (23°C): 2800 mPas) der Covestro AG ist ein Beispiel für ein hydrophiles Isocyanuratgruppen-haltiges Polyisocyanat auf Basis von 1,6-Diisocyanatohexan (HDI). Andere hydrophile Isocyanatgruppen-haltige Polyisocyanate anderer Hersteller kommen hier ebenfalls in Betracht. Ebenso ist eine *in situ* Herstellung von hydrophilierten Isocyanaten vor oder während der Schäumungsreaktion durch Zusatz geeigneter mono oder polyfunktioneller hydrophiler Isocyanat-reaktiver Verbindungen wie z.B. Polyether, Polyester und Sulfonsäuregruppentragende Verbindungen und anderer dem Fachmann bekannten Verbindungen denkbar.

Besonders bevorzugt ist eine Polyisocyanatkomponente B die einen Anteil an monomeren Diisocyanaten in der Polyisocyanatzusammensetzung B von höchstens 50 Gew.-%, vorteilhafter von höchstens 25% und insbesondere vorteilhaft von höchstens 10 Gew.-%, jeweils bezogen auf das Gesamtgewicht der Polyisocyanatkomponente B, aufweist. In einer weiteren bevorzugten Ausführungsform ist der Anteil an monomeren Diisocyanaten mindestens 0,01% Gew.-%, bevorzugt mindestens 0,05% Gew.-%, ganz besonders bevorzugt mindestens 0,1% Gew.-%.

Geeignete monomere Diisocyanate für die Komponente B sind: z.B. Stearyldiisocyanat, Dodecyldiisocyanat, Decyldiisocyanat, Nonyldiisocyanat, Octyldiisocyanat, Hexamethylendiisocyanat (HDI), Pentamethylendiisocyanat (PDI), Isophorondiisocyanat (IPDI), 4,4'-Diisocyanatodicyclohexylmethan (H₁₂MDI), Toluoldiisocyanat (TDI), Diphenylmethandiisocyanate (4,4'-Diphenylmethandiisocyanat, 2,4'-Diphenylmethandiisocyanat, 2,2'-Diphenylmethandiisocyanat) (MDI), Naphthalin-1,5-diisocyanat (NDI), 2,5- und 2,6-Bis(isocyanatomethyl)bicyclo[2.2.1]heptan (NBDI), 1,4-Butandiisocyanat (BDI),

In einer bevorzugten Ausführungsform werden aliphatische Polyisocyanate in Gew.% > 50% bevorzugt > 70% besonders bevorzugt > 90% eingesetzt.

In einer weiteren besonders bevorzugten Ausführungsform werden hauptsächlich monomerarme oligomere Polyisocyanate für die Polyisocyanatkomponente B verwendet. Die darin enthaltenen oligomeren Polyisocyanate werden üblicherweise durch Modifizierung einfacher aliphatischer, cycloaliphatischer, araliphatischer und/oder aromatischer monomerer Diisocyanate oder Mischungen solcher monomeren Diisocyanate erhalten. Die Herstellung von Polyisocyanuraten, zum Beispiel beschrieben in der US 3645979A, wird beispielsweise im Stand der Technik hauptsächlich ausgehend von flüssigen monomeren Diisocyanaten (z.B. Stearyldiisocyanat, Dodecyldiisocyanat, Decyldiisocyanat, Nonyldiisocyanat, Octyldiisocyanat, Hexamethylendiisocyanat (HDI), Pentamethylendiisocyanat (PDI), Isophorondiisocyanat (IPDI), 4,4'-Diisocyanatodicyclohexylmethan (H₁₂MDI), Toluoldiisocyanat (TDI), Diphenylmethandiisocyanate (4,4'-Diphenylmethandiisocyanat, 2,4'-Diphenylmethandiisocyanat, 2,2'-Diphenylmethandiisocyanat) (MDI), Naphthalin-1,5-diisocyanat (NDI), 2,5- und 2,6-Bis(isocyanatomethyl)bicyclo[2.2.1]heptan (NBDI), 1,4-Butandiisocyanat (BDI), aliphatischer wie aromatischer Natur beschrieben.

Bevorzugte Verbindungen für die Polyisocyanatkomponente B sind jene auf Basis von Stearyldiisocyanat, Dodecyldiisocyanat, Decyldiisocyanat, Nonyldiisocyanat, Octyldiisocyanat, Hexamethylendiisocyanat (HDI), Pentamethylendiisocyanat (PDI), Isophorondiisocyanat (IPDI), 4,4'-Diisocyanatodicyclohexylmethan (H₁₂MDI), Toluoldiisocyanat (TDI), 2,5- und 2,6-Bis(isocyanatomethyl)bicyclo[2.2.1]heptan (NBDI), 1,4-Butandiisocyanat (BDI), Abmischungen mit ihren Diisocyanat Vorläufern sowie anderen kompatiblen und co-löslichen isocyanatfunktionellen Prepolymeren wie Uretdione, Biurete, Harnstoffe, asymetrische Trimere, Mischtrimere verschiedener Isocyanate und andere die bei der Herstellung von Trimeren Isocyanuratverbindungen mit einer Funktionalität >=2 anfallen und literaturbekannt sind.

Besonders bevorzugt sind Isocyanuratgruppen-haltige Polyisocyanate auf Basis von 1,5-Diisocyanatopentan (PDI) mit einem NCO-Gehalt von 23,2 %, 1,6-Diisocyanatohexan (HDI) mit einem NCO-Gehalt von 21,5 %, einer mittleren NCO-Funktionalität von 3 (nach GPC), einem Gehalt an monomerem PDI von 0,3 % und einer Viskosität von 13.000 mPas (25 °C) oder Isocyanuratgruppen-haltiges Polyisocyanat auf Basis von 1,6-Diisocyanatohexan (HDI) mit einem NCO-Gehalt von 21,8 %, einer mittleren NCO-Funktionalität von 3,5 (nach GPC), einem Gehalt an monomerem HDI von 0,1 % und einer Viskosität von 3.000 mPas (23 °C) oder Isocyanuratgruppen-haltiges Polyisocyanat auf Basis von 1,6-Diisocyanatohexan (HDI) mit einem NCO-Gehalt von 21,7 %, einer mittleren NCO-Funktionalität von 3,1 (nach GPC), einem Gehalt an monomerem HDI von 0,1 % und einer Viskosität von 1.200 mPas (23 °C) oder Isocyanuratgruppen-haltiges Polyisocyanat auf Basis von 1,6-Diisocyanatohexan (HDI) mit einem NCO-Gehalt von 20,0 %, einer mittleren NCO-Funktionalität von 4,2 (nach GPC), einem Gehalt an monomerem HDI von 0,2 % und einer Viskosität von 22.700 mPas (20°C). Ebenfalls bevorzugt ist ein Isocyanuratgruppen-haltiges Polyisocyanat auf Basis von 1,6-Diisocyanatohexan (HDI) mit einem NCO-Gehalt von 23,2 %, einer mittleren NCO-Funktionalität von 3,2 (nach GPC), einem Gehalt an monomerem HDI von 0,2 % und einer Viskosität von 1200 mPas (23 °C), ein Isocyanuratgruppen-haltiges Polyisocyanat auf Basis von 1,6-Diisocyanatohexan (HDI) mit einem NCO-Gehalt von 20 %, einer mittleren NCO-Funktionalität von 4,2 (nach GPC), einem Gehalt an monomerem HDI von kleiner 0,25 % und einer Viskosität von 16000 mPas (23 °C), ein hydrophiles Isocyanuratgruppen-haltiges Polyisocyanat auf Basis von 1,6-Diisocyanatohexan (HDI) mit einem NCO-Gehalt von 17,4 %, einer mittleren NCO-Funktionalität von 3,2 (nach GPC), einem Gehalt an monomerem HDI von 0,1 % und einer Viskosität von 2800 mPas (23 °C), ein Isocyanuratgruppen-haltiges Polyisocyanat auf Basis von 1,6-Diisocyanatohexan (HDI) mit einem NCO-Gehalt von 21,7 %, einer mittleren NCO-Funktionalität von 3,5 (nach GPC), einem Gehalt an monomerem HDI von 0,1 % und einer Viskosität von 3000 mPas (23 °C) und ein Isocyanuratgruppen-haltiges Polyisocyanat auf Basis von 1,5-Diisocyanatopentan (PDI) mit einem NCO-Gehalt von 21,5 %, einer mittleren NCO-Funktionalität von 3 (nach GPC), einem Gehalt an monomerem PDI von kleiner 0,3 % und einer Viskosität von 9500 mPas (23 °C).

Die mittlere NCO-Funktionalität der Komponente B wird, sofern nicht anders beschrieben, mittels Gelpermeationschromatographie (GPC) bestimmt. Die Funktionalität ist ein Ausdruck für die Zahl der reaktiven Gruppen pro Molekül, d. h. für die Zahl der potentiellen Verknüpfungsstellen bei der Ausbildung eines Netzwerkes. Polyisocyanate, wie sie z, B. bei der Trimerisierung von Diisocyanaten gebildet werden, bestehen jedoch nicht nur aus einer definierten Molekülsorte, sondern enthalten eine breite Verteilung unterschiedlicher Moleküle mit unterschiedlichen Funktionalitäten. Als Bestimmungsgröße für die Polyisocyanate wird daher die mittlere Funktionalität angegeben. Die mittlere Funktionalität von Polyisocyanaten ist durch das Verhältnis von zahlenmittlerem Molekulargewicht und Äquivalentgewicht eindeutig bestimmt und wird im Allgemeinen aus der mit Hilfe der Gelpermeationschromatographie ermittelten Molekulargewichtsverteilung berechnet.

Die oligomeren Polyisocyanate können erfindungsgemäß insbesondere Uretdion-, Isocyanurat-, Allophanat-, Biuret-, Iminooxadiazindion- und/oder Oxadiazintrionstruktur aufweisen. Besonders bevorzugt sind Polyisocyanate mit Anteilen von Isocyanuratgruppen von > 10 Gew.-%, ganz besonders bevorzugt > 20 Gew.-% in der Polyisocyanatkomponente B.

Unabhängig vom der zu Grunde liegenden oligomeren Struktur (Uretdion-, Isocyanurat-, Allophanat-, Biuret-, Iminooxadiazindion- und/oder Oxadiazintrionstruktur) weist die beim erfindungsgemäßen Verfahren einzusetzende Polyisocyanatkomponente B und/oder die darin enthaltenen oligomeren Polyisocyanate vorzugsweise eine (mittlere) NCO-Funktionalität von 2,0 bis 6, vorzugsweise von 2,3 bis 4,0 auf.

Besonders bevorzugte Ergebnisse stellen sich ein, wenn die erfindungsgemäß einzusetzende Polyisocyanatkomponente B einen Gehalt an Isocyanatgruppen von 15 bis 40 Gew.-%, vorzugsweise von 20 bis 30 Gew.-%, jeweils bezogen auf die gesamte Polyisocyanatzusammensetzung B, aufweist.

Geeignete kommerziell erhältliche Polyisocyanate sind unter anderem Desmodur N 3900, Desmodur XP 2675, Desmodur XP 2489, Desmodur N3300, Desmodur N3600 und Desmodur N eco 7300 von der Covestro Deutschland AG.

### Erfindungsgemäße Polyurethanschaumstoffe

In einer bevorzugten Ausführungsform weist die Schaumdicke des erfindungsgemäßen Schaumstoffs senkrecht zur Lichteinstrahlung mindestens ein Multiplikator von 3 bevorzugt 5 besonders bevorzugt 10 * Zellen Dicke mit Bezug auf den durchschnittlichen Zellendurchmesser auf.

In einer weiteren bevorzugten Ausführungsform weist der erfindungsgemäße Schaumstoff einen Lambda-Wert von kleiner 100 mW/(m*K), bevorzugt von kleiner als 80 mW/(m*K) und insbesondere bevorzugt von kleiner als 60 mW/(m*K), am stärksten bevorzugt von kleiner als 50 mW/(m*K), gemessen gemäß DIN 52616:1977-11 auf.

In einer weiteren bevorzugten Ausführungsform besitzt der erfindungsgemäße Schaumstoff einen kristallinen Anteil kleiner 20% bevorzugt kleiner 10% besonders bevorzugt kleiner 2 %. In einer besonders bevorzugten Ausführungsform enthalten die erhaltenen erfindungsgemäßen Schaumstoffe kristalline Anteile, deren Kristallgrößen sichtbares Licht nicht merklich brechen.

### Allgemeines Herstellungsverfahren

Schäumungsprozesse finden im Allgemeinen entweder chemisch oder physikalisch statt. Bei der Herstellung von PUR-Schäumen werden die eingesetzten Komponenten (A und B) entweder durch eine Hochdruckvermischung oder durch eine Niederdruckvermischung (meist Stachelrührer) vermischt. Bei Mischungen verschiedener Isocyanate werden diese bevorzugt zuvor abgemischt. Gleiches gilt für eine Mischung der A-Komponenten. Dabei wird in bevorzugten Ausführungsformen des Standes der Technik absichtlich Luft eingemischt, da die Mikroluftbläschen Nukleierungskeime sind und somit ein feinzelligerer Schaum entsteht, was insbesondere für Isolierhartschäume gewünscht ist.

Die Lichttransmission transluzenter Schäume ist signifikant höher, wenn ein blasenfreies Vermischen unter Vermeidung der Inkorporation von Gasen, insbesondere Luft verwendet wird. Blasenfreie Mischverfahren sind insbesondere bei schneller reagierenden Systemen wichtig, da entsprechend weniger Zeit für die Koaleszenz kleiner Bläschen zu größeren verbleibt.

### Blasenfreies Herstellverfahren

Die erfindungsgemäßen Schaumstoffe werden in einer bevorzugten Ausführungsform erhalten durch ein erfindungsgemäßes Verfahren in dem die Reaktionskomponenten unter weitgehender Vermeidung von Mikroblasen mit einem Blasendurchmesser < 0,5 mm in geeigneten Mischaggregaten gemischt werden. Wobei eine weitgehende Vermeidung von Mikroblasen zum Beispiel durch eine optisch transparente oder transluzente Mischung im Gegensatz zu einer milchig trüben Mischung gekennzeichnet ist. Je weniger Mikroblasen im Reaktionsgemisch nach der Vermischung enthalten sind, desto höher wird anschließend die Lichttransmission sein. Durch die Mikroblasen wird das Licht gestreut und der daraus entstehende Schaum hat eine geringere Lichttransmission. Man kann hierzu bereits die Trübung der Reaktionsmischung vor dem Einsatz der Treibreaktion eine Trübung nach DIN EN ISO 7027:2016-11 bestimmen, wobei erfindungsgemäß die Trübung weniger als 3500 NTU, bevorzugt 3000 NTU, stärker bevorzugt 2000 NTU und ganz besonders bevorzugt von weniger als 1000 NTU beträgt.

Durch das Fehlen von Luft oder allgemein, durch das Fehlen gasförmiger Nukleierungsmittel, entsteht erfindungsgemäß ein deutlich grobzelligerer Schaum, der eine wesentlich größere Lichttransmission hat. Im Gegensatz zu physikalischen Treibmitteln lösen sich die gasförmigen Nukleierungsmittel im Wesentlichen nicht in der Reaktionsmasse/dem Reaktionsgemisch. Sollten solche gasförmigen Nukleierungsmittel vorhanden sein oder eingebracht worden sein, so können diese durch Entgasen im Wesentlichen entfernt werden. Feinzellige Schäume streuen das Licht stärker, was zu Lasten der Lichttransmission geht.

### Beispiele

Die vorliegende Erfindung wird im Folgenden anhand von Beispielen weiter erörtert:
Verwendete Komponenten:
   Katalysatoren
   - Dibutylzinndilaurat
   - DBU (1,8-Diazabicyclo[5.4.0] undec-7-en)
Verwendete Verbindungen A):
   - Desmophen C1100: (difunktionelles Ester-Carbonatdiol mit einer Viskosität von 3200 ± 1300 mPa*s (bei 23°C)
   - LS2328: (difunktionelles Polyesterpolyol, mit einer OH-Zahl von 755 (mg KOH/g)) Schaumstabilisatoren (Polyether-Polydimethylsiloxan-Copolymere):
   - Tegostab B8421
Verwendete Iso- und Polyisocyanate B)
   - Desmodur N3900: (Iminooxadiazinedion)
Stabilisatoren
   - Irganox 1135: 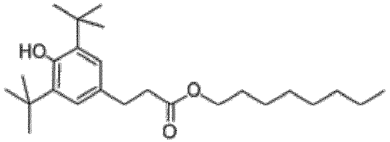
   - Irganox PS800 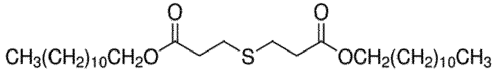
Verwendete Messverfahren:
   Die Wärmeleitzahlen wurden gemäß nach DIN 52616: 1977-11 an 30 mm dicken Schaumstoffen ermittelt.
   Lichttransmission nach EN ISO 13468-2:2006 an 20 mm dicken Schaumstoffen gemessen, außer es wird explizit eine andere Dicke angegeben.
   Zellgröße und Zellstegdicke wurden wie vorstehend beschrieben unter Verwendung eines Lichtmikroskops gemessen.
   Der Yellowing Index, nachstehend auch lediglich als YI bezeichnet, wurde gemäß ASTM E 313:2015 bestimmt.
   Die Trübung der Reaktionsgemische wurde nach DIN EN ISO 7027:2016-11 bestimmt.

### Vergleichsbeispiel 1a und Beispiel 1b

Eine Isocyanat-reaktive Zusammensetzung aus 65,15 g Desmophen C1100, 0,17 g Irganox 1135, 0,17 g Irganox PS800, 1,75 g Wasser, 0,13 g Katalysator Dibutylzinndilaurat und 0,25 g Katalysator DBU wurde mit 57,4 g Desmodur N3900 wie nachfolgend beschrieben verarbeitet:
a) Die oben aufgeführten Substanzen wurden mit einem Laborrührwerk der Fa. Pendraulik bei 2800 U/min für 60 Sekunden und 23 °C Rohstofftemperatur vermischt und das Reaktionsgemisch vorsichtig in eine Form gegossen. Der Schaum war nach 2 h abgebunden.
b) Die oben aufgeführten Substanzen wurden mit einem Speedmixer bei 2750 U/min für 30 Sekunden und 23 °C Rohstofftemperatur vermischt und das Reaktionsgemisch vorsichtig in eine Form gegossen. Der Schaum war nach 2 h abgebunden.

Nachfolgende Lichttransmissionen an 20 mm dicken Schäumen nach EN ISO 13468-2 wurden ermittelt:

| 1a)Pendraulik | 1b)Speedmixer |
|---|---|
| 3,4% | 17,4% |
| Initialtrübung nach Mischen: 3626 NTU | Initialtrübung nach Mischen: 388 NTU |

### Vergleichsbeispiel 2a und Beispiel 2b

Eine Isocyanat-reaktive Zusammensetzung aus 48,02 g LS2328, 0,17 g Irganox 1135, 1,75 g Wasser, 0,16 g Schaumstabilisator Tegostab B8421 und 0,09 g Katalysator Dibutylzinndilaurat, 0,19 g Katalysator DBU wurde mit 74,79 g Desmodur N3900 wie nachfolgend beschrieben verarbeitet:
c) Die oben aufgeführten Substanzen wurden mit einem Laborrührwerk der Fa. Pendraulik bei 2800 U/min für 60 Sekunden und 23 °C Rohstofftemperatur vermischt und das Reaktionsgemisch vorsichtig in eine Form gegossen. Der Schaum war nach 2 h abgebunden.
d) Die oben aufgeführten Substanzen wurden mit einem Speedmixer bei 2750 U/min für 30 Sekunden und 23 °C Rohstofftemperatur vermischt und das Reaktionsgemisch vorsichtig in eine Form gegossen. Der Schaum war nach 2 h abgebunden.

Nachfolgende Lichttransmissionen an 15 bzw. 20 mm dicken Schäumen nach EN ISO 13468-2 wurden ermittelt:

| 2a)Pendraulik (15 mm)* | 2b)Speedmixer (20 mm) |
|---|---|
| <2,0% | 19,1% |
| | |
| Initialtrübung nach Mischen: 4500 NTU | Initialtrübung nach Mischen: 330 NTU |

| | |
|---|---|
| *) Bei 20 mm Schaumdicke des auf konventionellem Wege (mit Pendraulik-Rührwerk) hergestellten Schaumes war die Lichttransmission dieses feinzelligen, weißen Schaumes zu gering, so dass die Dicke auf 15 mm verringert werden musste um noch eine Messung durchführen zu können. | |

Die Wärmeleitfähigkeit von Beispiel 2b gemessen nach DIN 52616 beträgt 55 mW/mK.

Das Mischaggregat Speedmixer DAC 150 FAZ vermischt die Komponenten weitgehend blasenfrei, während beim Vermischen mit dem Laborrührwerk IKA - RW20 oder dem Laborrührwerk der Fa. Pendraulik Luft eingemischt wird. Die gemessene starke Trübung des Reaktionsgemisches beim Vermischen mit dem Laborrührer IKA - RW20 der Firma Pentraulik zeigt sich auch an der Lichttransmission der Schäume.

Bei einem Pendraulikmischer wird bei 2800 U/min Luft in das Reaktionsgemisch eingemischt. Es bildet sich ein "Strudel/Vortex" aus, dabei bildet sich beim Mischen eine große Mischoberfläche mit Luft aus, die zu unerwünschtem Lufteintrag führt.

Bei einem Speedmischer werden die Bestandteile in einer taumelden Rotationsbewegung gemischt. Dabei wird nicht nur oberflächenarm gemischt sondern es wird auch durch die Zentrifugalkraft, die Luft, als Bestandteil niedrigerer Dichte, aus dem Gemisch herausdrängt.

## Patentansprüche

1. Verfahren zur Herstellung eines transluzenten Polyurethanschaumstoffs durch Umsetzung einer Komponente A umfassend,
A1 mindestens eine, mit der Komponente B reaktive, Komponente mit Zeriwitinoff aktivem Wasserstoff;
A2 Wasser und / oder andere chemische Treibmittel;
A3 mindestens einen Schaumstabilisator;
A4 gegebenenfalls Hilfs- und/oder Zusatzstoffe;
A5 gegebenenfalls mindestens ein Flammschutzmittel;
A6 mindestens einen Katalysator;
und eine Komponente B, umfassend,
B1 mindestens eine aliphatische oder cycloaliphatische Polyisocyanatkomponente und / oder eine Kombination davon, und
B2 weniger als 20 Gew.-Teile einer aromatischen Polyisocyanatkomponente, wobei die Gewichtsteile von B2 bezogen sind auf die Summe der Gewichtsteile von B1 + B2, welche auf 100 Gew.-Teile normiert werden, **dadurch gekennzeichnet, dass**
die Umsetzung der Komponente A mit der Komponente B bei einer Isocyanat-Kennzahl von 70 bis 130 durchgeführt wird und wobei alle Gewichtsteilangaben der Komponenten A1 bis A6 so normiert sind, dass die Summe der Gewichtsteile von A1 bis A6 in der Zusammensetzung 100 Gew.-Teile sind, wobei
die Reaktionsmischung vor dem Einsatz der Treibreaktion eine Trübung von weniger als 3500 NTU gemessen nach DIN EN ISO 7027:2016-11 aufweist; und
wobei der erhaltene transluzente Polyurethanschaumstoff eine Lichttransmission nach EN ISO 13468-2:2006 im Bereich von 10% bis 60% gemessen bei einer Schichtdicke des Schaumstoffs von 20 mm aufweist, und wobei der erhaltene transluzente Polyurethanschaumstoff eine Trübung (Haze = 100* Transmission diffus / Transmission gesamt) nach ASTM D1003-13 von größer 80% gemessen bei einer Schichtdicke des Schaumstoffs von 20 mm, aufweist.

2. Verfahren gemäß Anspruch 1, **dadurch gekennzeichnet, dass** der erhaltene transluzente Polyurethanschaumstoff eine Wärmeleitfähigkeit, gemessen gemäß DIN 52612:2-1984-06 von kleiner als 100 mW/(m*K) aufweist.

3. Verfahren gemäß einem der vorstehenden Ansprüche, **dadurch gekennzeichnet, dass** der erhaltene transluzente Polyurethanschaumstoff farblos bis weiß ist und einen Yellowing Index, gemessen nach ASTM E 313:2015, von kleiner 10 aufweist bezogen auf eine Schichtdicke des Schaumstoffs von 20 mm.

4. Verfahren gemäß einem der vorstehenden Ansprüche **dadurch gekennzeichnet, dass**
der erhaltene Polyurethanschaumstoff als ein zu mindestens 40% geschlossenzelliger Polyurethanschaumstoff vorliegt.

5. Verfahren gemäß einem der vorstehenden Ansprüche, **dadurch gekennzeichnet, dass**
der erhaltene Polyurethanschaumstoff zudem eine mittlere Zellengröße zwischen 0,5 mm und 20 mm aufweist, gemessen über den größten Abstand zwischen zwei Zellkanten unter Verwendung eines Lichtmikroskops.

6. Verfahren gemäß einem der vorstehenden Ansprüche, **dadurch gekennzeichnet, dass**
der erhaltene Polyurethanschaumstoff eine Rohdichte des erhaltenen Schaums von höchstens 300 kg/m³, bestimmt mittels DIN EN ISO 845:2009-10, aufweist.

7. Verfahren gemäß einem der vorstehenden Ansprüche, **dadurch gekennzeichnet, dass**
der erhaltene Polyurethanschaumstoff eine mittlere Zellstegdicke von mindestens 0,05 mm aufweist, gemessen in der Mitte zwischen zwei Zwickeln eines Zellstegs unter Verwendung eines Lichtmikroskops.

8. Verfahren gemäß einem der vorstehenden Ansprüche, **dadurch gekennzeichnet, dass**
65 bis 99,2 Gew.-Teile von A1;
0,5 bis 8 Gew.-Teile von A2;
0,1 bis 5 Gew.-Teile A3;
0 bis 60 Gew.-Teile von A4, enthalten sind.

9. Verfahren gemäß einem der vorstehenden Ansprüche, **dadurch gekennzeichnet, dass**
0 bis 25 Gew.-Teile von A5;
0,2 bis 4 Gew.-Teile von A6 enthalten sind.

10. Verfahren gemäß einem der vorstehenden Ansprüche, **dadurch gekennzeichnet, dass** das Vermischen von entgasten Komponenten erfolgt.

11. Transluzenter Polyurethanschaumstoff, welcher durch ein Verfahren der vorstehenden Ansprüche erhalten wurde.

12. Mehrschichtverbundelement, in welchem der transluzente Polyurethanschaumstoff gemäß Anspruch 11 zwischen zwei Elementen vorliegt.

13. Mehrschichtverbundelement gemäß Anspruch 12, **dadurch gekennzeichnet, dass** das eine oder die zwei Elemente Gewebe, Gelege, Gestricke, Folien oder Platten sind.

14. Verwendung des transluzenten Polyurethanschaumstoffs gemäß Anspruch 11 oder des Mehrschichtverbundelements gemäß Anspruch 12 oder 13 als Bauelement, als Wandelement, in Fahrzeugen, in Lampen, als Möbel, als Trennwand oder in S anitäreinrichtungen.

## Claims

1. Process for producing a translucent polyurethane foam by reacting a component A comprising
A1 at least one component reactive with the component B and comprising Zerewitinoff-active hydrogen;
A2 water and/or other chemical blowing agents;
A3 at least one foam stabilizer;
A4 optionally auxiliary and/or additive substances;
A5 optionally at least one flame retardant;
A6 at least one catalyst;
and a component B comprising
B1 at least one aliphatic or cycloaliphatic polyisocyanate component and/or a combination thereof, and
B2 less than 20 parts by weight of an aromatic polyisocyanate component, wherein the parts by weight of B2 are based on the sum of the parts by weight of B1 + B2 which are normalized to 100 parts by weight, **characterized in that**
the reaction of the component A with the component B is performed at an isocyanate index of 70 to 130 and wherein all parts by weight for components A1 to A6 are normalized such that the parts by weight of A1 to A6 in the composition sum to 100 parts by weight, wherein
before onset of the blowing reaction the reaction mixture has a turbidity of less than 3500 NTU measured according to DIN EN ISO 7027:2016-11; and
wherein the obtained translucent polyurethane foam has a light transmission according to EN ISO 13468-2:2006 in the range from 10% to 60% measured at a layer thickness of the foam of 20 mm, and wherein the obtained translucent polyurethane foam has a haze (haze = 100* diffuse transmission / total transmission) according to ASTM D1003-13 of at least 80% measured at a layer thickness of the foam of 20 mm.

2. Process according to Claim 1, **characterized in that** the obtained translucent polyurethane foam has a thermal conductivity measured according to DIN 52612:2-1984-06 of less than 100 mW/(m*K).

3. Process according to any of the preceding claims, **characterized in that** the obtained translucent polyurethane foam is colorless to white and has a yellowing index measured according to ASTM E 313:2015 of less than 10 based on a thickness of the foam of 20 mm.

4. Process according to any of the preceding claims, **characterized in that**
the obtained polyurethane foam is in the form of a polyurethane foam having a closed-cell content of at least 40%.

5. Process according to any of the preceding claims, **characterized in that**
the obtained polyurethane foam moreover has an average cell size between 0.5 mm and 20 mm measured over the greatest distance between two cell edges using an optical microscope.

6. Process according to any of the preceding claims, **characterized in that**
the obtained polyurethane foam has an apparent density of the obtained form of not more than 300 kg/m³, determined according to DIN EN ISO 845:2009-10.

7. Process according to any of the preceding claims, **characterized in that**
the obtained polyurethane foam has an average cell wall thickness of at least 0.05 mm measured centrally between two nodes of a cell wall using an optical microscope.

8. Process according to any of the preceding claims, **characterized in that**
65 to 99.2 parts by weight of A1;
0.5 to 8 parts by weight of A2;
0.1 to 5 parts by weight of A3;
0 to 60 parts by weight of A4, are present.

9. Process according to any of the preceding claims, **characterized in that**
0 to 25 parts by weight of A5;
0.2 to 4 parts by weight of A6 are present.

10. Process according to any of the preceding claims, **characterized in that** mixing of degassed components takes place.

11. Translucent polyurethane foam obtained by a process of the preceding claims.

12. Multilayer composite element in which the translucent polyurethane foam according to Claim 11 is arranged between two elements.

13. Multilayer composite element according to Claim 12, **characterized in that** the one or the two elements are nonwoven fabrics, non-crimp fabrics, knitted fabrics, films or sheets.

14. Use of the translucent polyurethane foam according to Claim 11 or of the multilayer composite element according to Claim 12 or 13 as a constructional element, as a wall element, in vehicles, in lamps, as furniture, as a dividing wall or in sanitary installations.

## Revendications

1. Procédé pour la préparation d'une mousse translucide à base de polyuréthane, par transformation d'un composant A, comprenant :
A1 au moins un composant, réactif avec le composant B et présentant de l'hydrogène actif selon Zerewitinoff ;
A2 de l'eau et/ou d'autres agents gonflants chimiques ;
A3 au moins un stabilisant de mousse ;
A4 le cas échéant des adjuvants et/ou des additifs ;
A5 le cas échéant au moins un agent ignifuge ;
A6 au moins un catalyseur ;
et d'un composant B comprenant
B1 au moins un composant polyisocyanate aliphatique ou cycloaliphatique et/ou une combinaison correspondante et
B2 moins de 20 parties en poids d'un composant polyisocyanate aromatique, les parties en poids de B2 se référant à la somme des parties en poids de B1 + B2 qui ont été normalisées à 100 parties en poids, **caractérisé en ce que** la transformation du composant A avec le composant B est effectuée à un indice d'isocyanate de 70 à 130 et toutes les indications de parties en poids des composants A1 à A6 étant normalisées de manière telle que la somme des parties en poids de A1 à A6 dans la composition vaut 100 parties en poids,
le mélange réactionnel présentant, avant l'utilisation de la réaction de gonflage, une turbidité inférieure à 3500 NTU, mesurée selon la norme DIN EN ISO 7027:2016-11 ; et
la mousse translucide à base de polyuréthane obtenue présentant une transmission de lumière selon la norme EN ISO 13468-2:2006 dans la plage de 10% à 60%, mesurée à une épaisseur de couche de la mousse de 20 mm et la mousse translucide à base de polyuréthane obtenue présentant une turbidité (voile = 100* transmission diffuse/transmission totale) selon la norme ASTM D1003-13 supérieure à 80% mesurée à une épaisseur de couche de la mousse de 20 mm.

2. Procédé selon la revendication 1, **caractérisé en ce que** la mousse translucide à base de polyuréthane obtenue présente une conductibilité thermique, mesurée selon la norme DIN 52612:2-1984-06, inférieure à 100 mW/(m*K).

3. Procédé selon l'une quelconque des revendications précédentes, **caractérisé en ce que** la mousse translucide à base de polyuréthane obtenue est incolore à blanche et présente un indice de jaunissement, mesuré selon la norme ASTM E 313:2015, inférieur à 10, par rapport à une épaisseur de couche de la mousse de 20 mm.

4. Procédé selon l'une quelconque des revendications précédentes, **caractérisé en ce que** la mousse à base de polyuréthane obtenue se trouve sous forme d'une mousse à base de polyuréthane à pores dont au moins 40% sont fermés.

5. Procédé selon l'une quelconque des revendications précédentes, **caractérisé en ce que** la mousse à base de polyuréthane obtenue présente en outre une dimension moyenne des pores entre 0,5 mm et 20 mm, mesurée par l'intermédiaire de la plus grande distance entre deux bords de pore à l'aide d'un microscope optique.

6. Procédé selon l'une quelconque des revendications précédentes, **caractérisé en ce que** la mousse à base de polyuréthane obtenue présente une densité brute de la mousse obtenue d'au plus 300 kg/m³, déterminée selon la norme DIN EN ISO 845:2009-10.

7. Procédé selon l'une quelconque des revendications précédentes, **caractérisé en ce que** la mousse à base de polyuréthane obtenue présente une épaisseur moyenne de l'âme entre les pores d'au moins 0,05 mm, mesurée au centre entre deux interstices d'une âme de pore à l'aide d'un microscope optique.

8. Procédé selon l'une quelconque des revendications précédentes, **caractérisé en ce que**
65 à 99,2 parties en poids de A1 ;
0,5 à 8 parties en poids de A2 ;
0,1 à 5 parties en poids de A3 ;
0 à 60 parties en poids de A4 sont contenues.

9. Procédé selon l'une quelconque des revendications précédentes, **caractérisé en ce que**
0 à 25 parties en poids de A5 ;
0,2 à 4 parties en poids de A6 sont contenues.

10. Procédé selon l'une quelconque des revendications précédentes, **caractérisé en ce que** le mélange de composants dégazés est effectué.

11. Mousse translucide à base de polyuréthane qui a été obtenue par un procédé selon les revendications précédentes.

12. Élément composite multicouche, dans lequel la mousse translucide à base de polyuréthane selon la revendication 11 se trouve entre deux éléments.

13. Élément composite multicouche selon la revendication 12, **caractérisé en ce que** ledit un ou lesdits deux éléments sont des tissus, des mats, des tricots, des feuilles ou des plaques.

14. Utilisation de la mousse translucide à base de polyuréthane selon la revendication 11 ou de l'élément composite multicouche selon la revendication 12 ou 13 comme élément de construction, comme élément de paroi, dans des véhicules, dans des lampes, en tant que meuble, en tant que paroi de séparation ou dans des équipements sanitaires.
